# EUROPEAN PATENT APPLICATION

(11) **EP 2 395 735 A2**
(43) Date of publication of application: **14.12.2011**
(21) Application number: 11002638.2
(22) Date of filing: 30.03.2011
(51) Int. Cl.: H04M 1/57, H04M 1/725

(54) **Mobile terminal and operating method thereof**

(30) Priority: 08.06.2010 KR 20100053880; 02.09.2010 KR 20100086148
(71) Applicant: LG Electronics Inc., Seoul 150-721 (KR)
(72) Inventor: Kwon, Taejung, Geumchun-ku Seoul 153-023 (KR)
(74) Representative: Beyer, Andreas

(57) **Abstract**

A mobile terminal and an operating method thereof are provided. The operating method includes during the transmission or reception of a communication event between the mobile terminal and a counterpart mobile terminal, obtaining location information of the counterpart mobile terminal; obtaining a map of a first region corresponding to the location information of the counterpart mobile terminal; and displaying at least part of the map of the first region on a display screen indicating that the transmission or reception of the communication event is in progress. Therefore, it is possible for a user to easily identify the location of the counterpart mobile terminal from, for example, a 'call waiting' or 'call connected' screen, during the transmission or reception of the communication event.

## Description

### CROSS-REFERENCE TO RELATED APPLICATION

This application claims the priority benefit of Korean Patent Application No. 10-2010-0053880, filed on June 8, 2010 and 10-2010-0086148, filed on September 2, 2010 in the Korean Intellectual Property Office, the disclosure of which is incorporated herein by reference.

### BACKGROUND OF THE INVENTION

### 1. Field of the Invention

The present invention relates to a mobile terminal and an operating method thereof, and more particularly, to a mobile terminal capable of realizing augmented reality (AR) and an operating method of the mobile terminal.

### 2. Description of the Related Art

Mobile terminals are portable devices capable of performing voice/video calls, inputting and outputting information, and/or storing data. As the functions of mobile terminals diversify, an increasing number of mobile terminals have become able to provide various complicated functions, such as capturing photos and moving images, playing music files and moving image files, providing games, receiving broadcast programs, and providing wireless Internet services.

In the meantime, when a communication event such as a call connection request or an incoming message is received, a predefined display screen selected in advance by the manufacturer or user of a mobile terminal can be displayed on a display module of the mobile terminal. Since no particular information is generally displayed on the display screen, the user may feel bored while waiting for the communication event to complete.

Therefore, a method is needed to display, during the transmission or reception of a communication event between a mobile terminal and its counterpart mobile terminal, various information on the counterpart mobile terminal on a display screen on the mobile terminal.

### SUMMARY OF THE INVENTION

The present invention provides a mobile terminal and an operating method thereof, in which, during the transmission of a communication event between the mobile terminal and its counterpart mobile terminal, location information of the counterpart mobile terminal can be dynamically provided to a user of the mobile terminal.

The present invention also provides a mobile terminal and an operating method thereof, in which, during the transmission of a communication event between the mobile terminal and its counterpart mobile terminal, content previously communicated between the mobile terminal and the counterpart mobile terminal or uploaded by the counterpart mobile terminal can be effectively provided to a user of the mobile terminal.

According to an aspect of the present invention, there is provided an operating method of a mobile terminal, the operating method including during the transmission or reception of a communication event between the mobile terminal and a counterpart mobile terminal, obtaining location information of the counterpart mobile terminal; obtaining a map of a first region corresponding to the location information of the counterpart mobile terminal; and displaying at least part of the map of the first region on a display screen indicating that the transmission or reception of the communication event is in progress.

According to another aspect of the present invention, there is provided a mobile terminal including a display module configured to, during the transmission or reception of a communication event between the mobile terminal and a counterpart mobile terminal, display thereon a display screen indicating that the transmission or reception of the communication event is in progress; and a controller configured to obtain location information of the counterpart mobile terminal and a map of a first region corresponding to the location information of the counterpart mobile terminal and display at least part of the map of the first region on the display screen.

### BRIEF DESCRIPTION OF THE DRAWINGS

The above and other features and advantages of the present invention will become more apparent by describing in detail preferred embodiments thereof with reference to the attached drawings in which:
FIG. 1 illustrates a block diagram of a mobile terminal according to an exemplary embodiment of the present invention;
FIG. 2 illustrates a front perspective view of the mobile terminal shown in FIG. 1;
FIG. 3 illustrates a rear perspective view of the mobile terminal shown in FIG. 2;
FIG. 4 illustrates a schematic diagram of a communication system capable of providing location information of each mobile terminal and a map showing the location of each mobile terminal;
FIG. 5 illustrates a flowchart of an operating method of a mobile terminal, according to a first exemplary embodiment of the present invention;
FIG. 6 illustrates a flowchart of an operating method of a mobile terminal, according to a second exemplary embodiment of the present invention;
FIGS. 7A through 7F illustrate diagrams for explaining an example of how to display a map on a 'call waiting' screen or a 'call connected' screen;
FIGS. 8A through 8D illustrate diagrams for explaining another example of how to display a map on a 'call waiting' screen or a 'call connected' screen;
FIGS. 9A through 9D illustrate diagrams for explaining another example of how to display a map on a 'call waiting' screen or a 'call connected' screen;
FIG. 10 illustrates a diagram for explaining an example of how to display call record information using a map;
FIG. 11 illustrates a flowchart of an operating method of a mobile terminal, according to a third exemplary embodiment of the present invention;
FIG. 12 illustrates a flowchart of an operating method of a mobile terminal, according to a fourth exemplary embodiment of the present invention;
FIGS. 13A through 13C illustrate diagrams for explaining an example of how to display content during call waiting; and
FIGS. 14A through 14C illustrate diagrams for explaining an example of how to display a content list during call waiting.

### DETAILED DESCRIPTION OF THE INVENTION

The present invention will hereinafter be described in detail with reference to the accompanying drawings in which exemplary embodiments of the invention are shown.

The term 'mobile terminal', as used herein, may indicate a mobile phone, a smart phone, a laptop computer, a digital broadcast receiver, a personal digital assistant (PDA), a portable multimedia player (PMP), or a navigation device. In this disclosure, the terms 'module' and 'unit' can be used interchangeably.

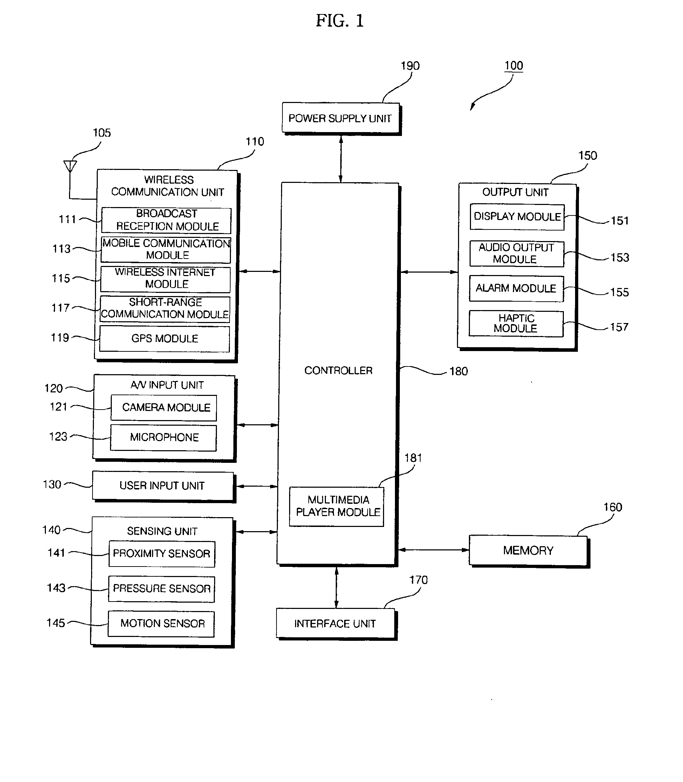

FIG. 1 illustrates a block diagram of a mobile terminal 100 according to an embodiment of the present invention. Referring to FIG. 1, the mobile terminal 100 may include a wireless communication unit 110, an audio/video (A/V) input unit 120, a user input unit 130, a sensing unit 140, an output unit 150, a memory 160, an interface unit 170, a controller 180, and a power supply unit 190. Here, when the above constituent elements are implemented, two or more of the constituent elements may be combined into one constituent element, or one constituent element may be divided into two or more constituent elements, if appropriate.

The wireless communication unit 110 may include a broadcast reception module 111, a mobile communication module 113, a wireless internet module 115, a short-range communication module 117, and a global positioning system (GPS) module 119.

The broadcast reception module 111 may receive broadcast signals and/or broadcast-related information from an external broadcast management server through a broadcast channel. The broadcast channel may be a satellite channel or a terrestrial channel. The broadcast management server may be a server which generates broadcast signals and/or broadcast-related information and transmits the generated broadcast signals and/or the generated broadcast-related information or may be a server which receives and then transmits previously-generated broadcast signals and/or previously-generated broadcast-related information.

The broadcast-related information may include broadcast channel information, broadcast program information and/or broadcast service provider information. The broadcast signals may include a TV broadcast signal, a radio broadcast signal, a data broadcast signal, the combination of a data broadcast signal and a TV broadcast signal or the combination of a data broadcast signal and a radio broadcast signal. The broadcast-related information may be provided to the mobile terminal 100 through a mobile communication network. In this case, the broadcast-related information may be received by the mobile communication module 113, rather than by the broadcast reception module 111.

The broadcast reception module 111 may receive broadcast signals using various broadcasting systems. In particular, the broadcast reception module 111 may receive digital broadcast signals using various digital broadcasting systems. In addition, the broadcast reception module 111 may be suitable not only for digital broadcasting systems but also for nearly all types of broadcasting systems other than digital broadcasting systems. The broadcast signal or the broadcast-related information received by the broadcast reception module 111 may be stored in the memory 160.

The mobile communication module 113 may transmit wireless signals to or receives wireless signals from at least one of a base station, an external terminal, and a server through a mobile communication network. The wireless signals may include various types of data according to whether the mobile terminal 100 transmits/receives voice call signals, video call signals, or text/multimedia messages.

The wireless internet module 115 may be a module for wirelessly accessing the internet. The wireless internet module 115 may be embedded in the mobile terminal 100 or may be installed in an external device. The wireless internet module 115 may be embedded in the mobile terminal 100 or may be installed in an external device. The wireless internet module 115 may use various wireless internet technologies such as wireless local area network (WLAN), Wireless Broadband (WiBro), World Interoperability for Microwave Access (Wimax), and High Speed Downlink Packet Access (HSDPA).

The short-range communication module 117 may be a module for short-range communication. The short-range communication module 117 may use various short-range communication techniques such as Bluetooth, radio frequency identification (RFID), infrared data association (IrDA), ultra wideband (UWB), and ZigBee.

The GPS module 119 may receive location information from a plurality of GPS satellites.

The A/V input unit 120 may be used to receive audio signals or video signals. The A/V input unit 120 may include a camera module 121 and a microphone 123. The camera module 121 may process various image frames such as still images or moving images captured by an image sensor during a video call mode or an image capturing mode. The image frames processed by the camera module 121 may be displayed by a display module 151.

The image frames processed by the camera module 121 may be stored in the memory 160 or may be transmitted to an external device through the wireless communication unit 110. The mobile terminal 100 may include two or more cameras 121.

The microphone 123 may receive external audio signals during a call mode, a recording mode, or a voice recognition mode and may convert the received sound signals into electrical audio data. During the call mode, the mobile communication module 113 may convert the electrical sound data into data that can be readily transmitted to a mobile communication base station, and may then output the data obtained by the conversion. The microphone 123 may use various noise removal algorithms to remove noise that may be generated during the reception of external sound signals.

The user input unit 130 may generate key input data based on a user input for controlling the operation of the mobile terminal 100. The user input unit 130 may be implemented as a keypad, a dome switch, or a static pressure or capacitive touch pad which is capable of receiving a command or information by being pushed or touched by a user. Alternatively, the user input unit 130 may be implemented as a wheel, a jog dial or wheel, or a joystick capable of receiving a command or information by being rotated. Still alternatively, the user input unit 130 may be implemented as a finger mouse. In particular, if the user input unit 130 is implemented as a touch pad and forms a mutual layer structure with the display module 151, the user input unit 130 and the display module 151 may be collectively referred to as a touch screen.

The sensing unit 140 may determine a current state of the mobile terminal 100 such as whether the mobile terminal 100 is opened or closed, the location of the mobile terminal 100 and whether the mobile terminal 100 is placed in contact with the user, and may generate a sensing signal for controlling the operation of the mobile terminal 100. For example, when the mobile terminal 100 is a slider-type mobile phone, the sensing unit 140 may determine whether the mobile terminal 100 is opened or closed. In addition, the sensing unit 140 may determine whether the mobile terminal 100 is powered by the power supply unit 190 and whether the interface unit 170 is connected to an external device.

The sensing unit 140 may include a proximity sensor 141, a pressure sensor 143 and a motion sensor 145. The proximity sensor 141 may detect an approaching object or whether there is an object nearby the mobile terminal 100 without mechanical contact. More specifically, the proximity sensor 141 may detect an approaching object based on a change in an alternating current (AC) magnetic field or a static magnetic field, or the rate of change of capacitance. The sensing unit 140 may include two or more detection sensors 141.

The pressure sensor 143 may determine whether pressure is being applied to the mobile terminal 100 or may measure the magnitude of pressure, if any, applied to the mobile terminal 100. The pressure sensor 143 may be installed in a certain part of the mobile terminal 100 where the detection of pressure is necessary. For example, the pressure sensor 143 may be installed in the display module 151. In this case, it is possible to differentiate a typical touch input from a pressure touch input, which is generated by applying greater pressure than that used to generate a typical touch input, based on a signal output by the pressure sensor 143. In addition, it is possible to determine the magnitude of pressure applied to the display module 151 upon receiving a pressure touch input based on the signal output by the pressure sensor 143.

The motion sensor 145 may determine the location and motion of the mobile terminal 100 using an acceleration sensor or a gyro sensor.

In the meantime, acceleration sensors are a type of device for converting a vibration in acceleration into an electric signal. With recent developments in micro-electromechanical system (MEMS) technology, acceleration sensors have been widely used in various products for various purposes ranging from detecting large motions such as car collisions as performed in airbag systems for automobiles to detecting minute motions such as the motion of the hand as performed in gaming input devices. In general, two or more acceleration sensors representing different axial directions are incorporated into a single package. There are some cases when the detection of only one axial direction, for example, a Z-axis direction, is necessary. Thus, when an X- or Y-axis acceleration sensor, instead of a Z-axis acceleration sensor, is required, the X- or Y-axis acceleration sensor may be mounted on an additional substrate, and the additional substrate may be mounted on a main substrate.

Gyro sensors are sensors for measuring angular velocity, and may determine the relative direction of the rotation of the mobile terminal 100 to a reference direction.

The output unit 150 may output audio signals, video signals and alarm signals. The output unit 150 may include the display module 151, an audio output module 153, an alarm module 155, and a haptic module 157.

The display module 151 may display various information processed by the mobile terminal 100. For example, if the mobile terminal 100 is in a call mode, the display module 151 may display a user interface (UI) or a graphic user interface (GUI) for making or receiving a call. If the mobile terminal 100 is in a video call mode or an image capturing mode, the display module 151 may display a UI or a GUI for capturing or receiving images.

If the display module 151 and the user input unit 130 form a mutual layer structure and are thus implemented as a touch screen, the display module 151 may be used not only as an output device but also as an input device capable of receiving information by being touched by the user.

If the display module 151 is implemented as a touch screen, the display module 151 may also include a touch screen panel and a touch screen panel controller. The touch screen panel is a transparent panel attached onto the exterior of the mobile terminal 100 and may be connected to an internal bus of the mobile terminal 100. The touch screen panel keeps monitoring whether the touch screen panel is being touched by the user. Once a touch input to the touch screen panel is received, the touch screen panel transmits a number of signals corresponding to the touch input to the touch screen panel controller. The touch screen panel controller processes the signals transmitted by the touch screen panel, and transmits the processed signals to the controller 180. Then, the controller 180 determines whether a touch input has been generated and which part of the touch screen panel has been touched based on the processed signals transmitted by the touch screen panel controller.

The display module 151 may include electronic paper (e-paper). E-paper is a type of reflective display technology and can provide as high resolution as ordinary ink on paper, wide viewing angles, and excellent visual properties. E-paper can be implemented on various types of substrates such as a plastic, metallic or paper substrate and can display and maintain an image thereon even after power is cut off. In addition, e-paper can reduce the power consumption of the mobile terminal 100 because it does not require a backlight assembly. The display module 151 may be implemented as e-paper by using electrostatic-charged hemispherical twist balls, using electrophoretic deposition, or using microcapsules.

The display module 151 may include at least one of a liquid crystal display (LCD), a thin film transistor (TFT)-LCD, an organic light-emitting diode (OLED), a flexible display, and a three-dimensional (3D) display. The mobile terminal 100 may include two or more display modules 151. For example, the mobile terminal 100 may include an external display module (not shown) and an internal display module (not shown).

The audio output module 153 may output audio data received by the wireless communication unit 110 during a call reception mode, a call mode, a recording mode, a voice recognition mode, or a broadcast reception mode or may output audio data present in the memory 160. In addition, the audio output module 153 may output various sound signals associated with the functions of the mobile terminal 100 such as receiving a call or a message. The audio output module 153 may include a speaker and a buzzer.

The alarm module 155 may output an alarm signal indicating the occurrence of an event in the mobile terminal 100. Examples of the event include receiving a call signal, receiving a message, and receiving a key signal. Examples of the alarm signal output by the alarm module 155 include an audio signal, a video signal and a vibration signal. More specifically, the alarm module 155 may output an alarm signal upon receiving an incoming call or message. In addition, the alarm module 155 may receive a key signal and may output an alarm signal as feedback to the key signal. Therefore, the user may be able to easily recognize the occurrence of an event based on an alarm signal output by the alarm module 155. An alarm signal for notifying the user of the occurrence of an event may be output not only by the alarm module 155 but also by the display module 151 or the audio output module 153.

The haptic module 157 may provide various haptic effects (such as vibration) that can be perceived by the user. If the haptic module 157 generates vibration as a haptic effect, the intensity and the pattern of vibration generated by the haptic module 157 may be altered in various manners. The haptic module 157 may synthesize different vibration effects and may output the result of the synthesization. Alternatively, the haptic module 157 may sequentially output different vibration effects.

The haptic module 157 may provide various haptic effects, other than vibration, such as a haptic effect obtained using a pin array that moves perpendicularly to a contact skin surface, a haptic effect obtained by injecting or sucking in air through an injection hole or a suction hole, a haptic effect obtained by giving a stimulus to the surface of the skin, a haptic effect obtained through contact with an electrode, a haptic effect obtained using an electrostatic force, and a haptic effect obtained by realizing the sense of heat or cold using a device capable of absorbing heat or generating heat. The haptic module 157 may be configured to enable the user to recognize a haptic effect using the kinesthetic sense of the fingers or the arms. The mobile terminal 100 may include two or more haptic modules 157.

The memory 160 may store various programs necessary for the operation of the controller 180. In addition, the memory 160 may temporarily store various data such as a list of contacts, messages, still images, or moving images.

The memory 160 may include at least one of a flash memory type storage medium, a hard disk type storage medium, a multimedia card micro type storage medium, a card type memory (e.g., a secure digital (SD) or extreme digital (XD) memory), a random access memory (RAM), and a read-only memory (ROM). The mobile terminal 100 may operate a web storage, which performs the functions of the memory 160 on the internet.

The interface unit 170 may interface with an external device that can be connected to the mobile terminal 100. The interface unit 170 may be a wired/wireless headset, an external battery charger, a wired/wireless data port, a card socket for, for example, a memory card, a subscriber identification module (SIM) card or a user identity module (UIM) card, an audio input/output (I/O) terminal, a video I/O terminal, or an earphone. The interface unit 170 may receive data from an external device or may be powered by an external device. The interface unit 170 may transmit data provided by an external device to other components in the mobile terminal 100 or may transmit data provided by other components in the mobile terminal 100 to an external device.

When the mobile terminal 100 is connected to an external cradle, the interface unit 170 may provide a path for supplying power from the external cradle to the mobile terminal 100 or for transmitting various signals from the external cradle to the mobile terminal 100.

The controller 180 may control the general operation of the mobile terminal 100. For example, the controller 180 may perform various control operations regarding making/receiving a voice call, transmitting/receiving data, or making/receiving a video call. The controller 180 may include a multimedia player module 181, which plays multimedia data. The multimedia player module 181 may be implemented as a hardware device and may be installed in the controller 180. Alternatively, the multimedia player module 181 may be implemented as a software program.

The power supply unit 190 may be supplied with power by an external power source or an internal power source and may supply power to the other components in the mobile terminal 100.

The mobile terminal 100 may include a wired/wireless communication system or a satellite communication system and may thus be able to operate in a communication system capable of transmitting data in units of frames or packets.

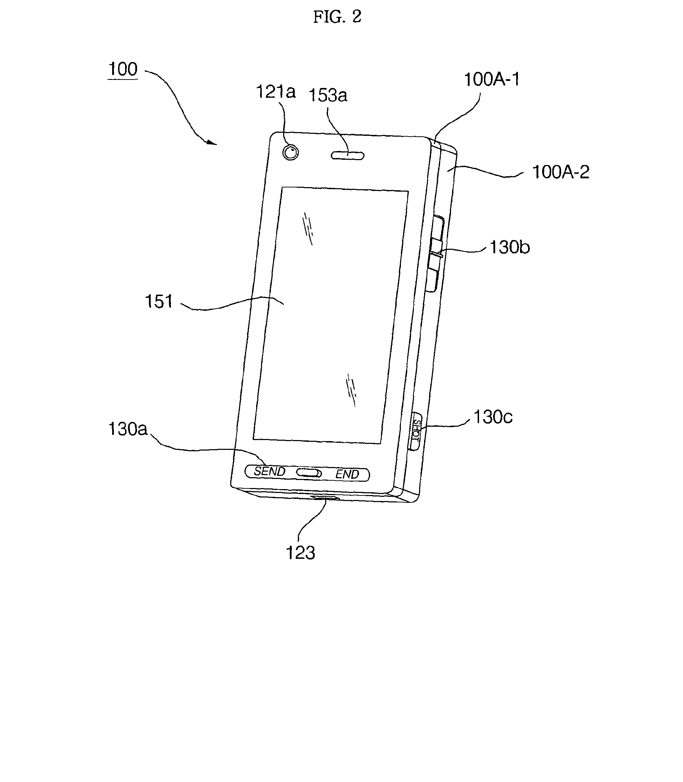

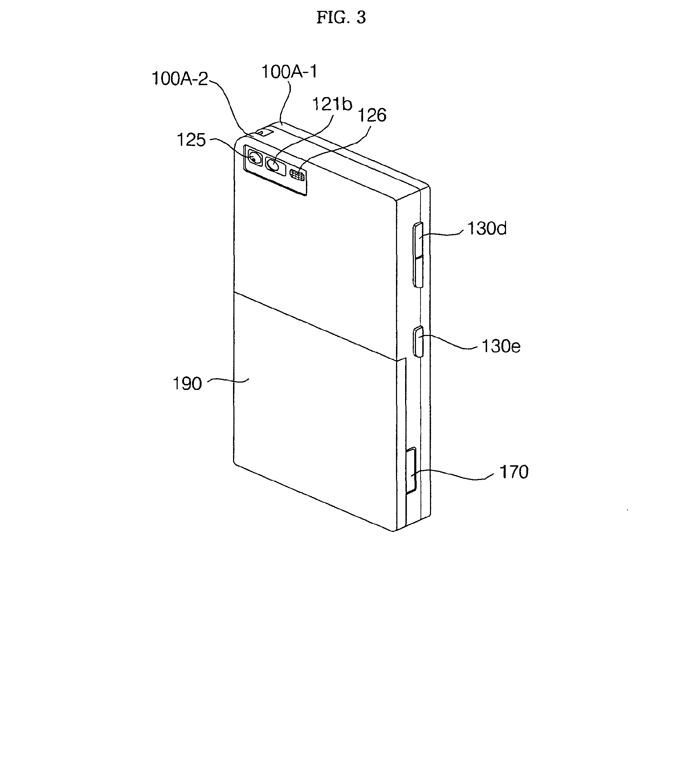

The exterior structure of the mobile terminal 100 will hereinafter be described in detail with reference to FIGS. 2 and 3. The present invention can be applied to nearly all types of mobile terminals such as a folder-type, a bar-type, a swing-type and a slider-type mobile terminal. However, for convenience, it is assumed that the mobile terminal 100 is a bar-type mobile terminal equipped with a full touch screen.

FIG. 2 illustrates a front perspective view of the mobile terminal 100. Referring to FIG. 2, the exterior of the mobile terminal 100 may be formed by a front case 100A-1 and a rear case 100A-2. Various electronic devices may be installed in the space formed by the front case 100A-1 and the rear case 100A-2. At least one middle case (not shown) may be additionally provided between the front case 100A-1 and the rear case 100A-2. The front case 100A-1, the rear case 100A-2 and the middle case(s) may be formed of a synthetic resin through injection molding. Alternatively, the front case 100A-1 and the rear case 100A-2 may be formed of a metal such as stainless steel (STS) or titanium (Ti).

The display module 151, a first audio output module 153a, a first camera 121a, and a first user input module 130a may be disposed in the main body of the mobile terminal 100, and particularly, in the front case 100A-1. Second and third user input modules 130b and 130c and the microphone 123 may be disposed on one side of the rear case 100A-2.

The display module 151 may include an LCD or OLED that can visualize information. If a touch pad is configured to overlap the display module 151 and thus to form a mutual layer structure, the display module 151 may serve as a touch screen. Thus, the user can enter various information to the mobile terminal 100 simply by touching the display module 151.

The first audio output module 153a may be implemented as a receiver or a speaker. The first camera 121a may be configured to be suitable for capturing a still or moving image of the user. The microphone 123 may be configured to properly receive the user's voice or other sounds.

The first through third user input modules 130a through 130c and fourth and fifth user input modules 130d and 130e may be collectively referred to as the user input unit 130. The user input unit 130 may adopt various tactile manners as long as it can offer tactile feedback to the user.

For example, the user input unit 130 may be implemented as a dome switch or touch pad capable of receiving a command or information by being pushed or touched by the user; or a wheel, a jog dial or wheel, or a joystick capable of receiving a command or information by being rotated. More specifically, the first user input module 130a may be used to enter various commands such as 'start', 'end', and 'scroll' to the mobile terminal 100, the second user input module 130b may be used to select an operating mode for the mobile terminal 100, and the third user input module 130c may serve as a hot key for activating certain functions of the mobile terminal 100.

When the display module 151 is approached by the user's finger, the proximity sensor 141 may detect the existence of the approaching finger, and may output a proximity signal. The proximity sensor 141 may output different proximity signals according to the distance between the display module 151 and the approaching finger. For a precise detection of the approaching finger, a plurality of proximity sensors 141 having different detection ranges may be employed. In this case, it is possible to precisely determine the distance between the approaching finger and the display module 151 by comparing a plurality of proximity signals respectively provided by the plurality of proximity sensors 141. In addition, it is possible to determine which part of the display module 151 is being approached by the approaching finger and whether the approaching finger is being moved within the close vicinity of the display module 15 by determining which of the plurality of proximity sensors 141 are outputting proximity signals. The controller 180 may identify a touch key, if any, currently being approached by the approaching finger and may then control the haptic module 157 to generate a vibration signal corresponding to the identified touch key.

When the user tilts or shakes the mobile terminal 100, the motion sensor 145 may detect the movement of the mobile terminal 100, and may generate a signal corresponding to the detected movement to the controller 180. The controller 180 may extract various motion information such as the direction, angle, speed and intensity of the movement of the mobile terminal 100 and the location of the mobile terminal 100 from the signal provided by the motion sensor 145.

The controller 180 may keep track of the movement of the mobile terminal 100 based on the extracted motion information. The type of motion information that can be extracted from the signal provided by the motion sensor 145 may vary according to the type of motion sensor 145. Thus, more than one motion sensor 145 capable of providing desired motion information may be employed in the mobile terminal 100. The controller 180 may control the motion sensor 145 to operate only when a predetermined application is executed.

FIG. 3 illustrates a rear perspective view of the mobile terminal 100. Referring to FIG. 3, the fourth and fifth user input modules 130d and 130e and the interface unit 170 may be disposed on one side of the rear case 100A-2, and a second camera 121b may be disposed at the back of the rear case 100A-2.

The second camera 121b may have a different shooting direction from that of the first camera 121a shown in FIG. 2. In addition, the first and second cameras 121a and 121b may have different resolutions. For example, the first camera 121a may be used to capture and then transmit an image of the face of the user during a video call. Thus, a low-resolution camera may be used as the first camera 121a. The second camera 121b may be used to capture an image of an ordinary subject. In this case, the image captured by the second camera 121b may not need to be transmitted. Thus, a high-resolution camera may be used as the second camera 121b.

A mirror 125 and a camera flash 126 may be disposed near the second camera 121b. The mirror 125 may be used for the user to prepare him- or herself for taking a self-portrait. The cameral flash 126 may be used to illuminate a subject when the user attempts to capture an image of the subject with the second camera 121b.

A second audio output module (not shown) may be additionally provided in the rear case 100A-2. The second audio output module may realize a stereo function along with the first audio output module 153a. The second audio output module may also be used in a speaker-phone mode.

Not only an antenna (not shown) for making or receiving a call but also an antenna (not shown) for receiving a broadcast signal may be disposed on one side of the rear case 100A-2. The antennas may be installed so as to be able to be retracted from the rear case 100A-2.

The interface unit 170 may serve as a pathway for allowing the mobile terminal 100 to exchange data with an external device. For example, the interface unit 170 may include at least one of a connector for connecting earphones to the mobile terminal wiredly or wirelessly, a port for performing short-range communication, and a power supply port for supplying power to the mobile terminal 100. Alternatively, the interface unit 170 may include a card socket for receiving a SIM card, a UIM card or an exterior card such as a memory card.

The power supply unit 190, which supplies power to the mobile terminal 100, may be disposed in the rear case 100A-2. The power supply unit may be a rechargeable battery and may be coupled to the rear case 100A-2 so as to be attachable to or detachable from the rear case 100A-2.

The second camera 121b and the other elements that have been described as being provided in the rear case 100A-2 may be provided in the front case 100A-1. In addition, the first camera 121a may be configured to be rotatable and thus to cover the shooting direction of the second camera 121b. In this case, the second camera 121b may be optional.

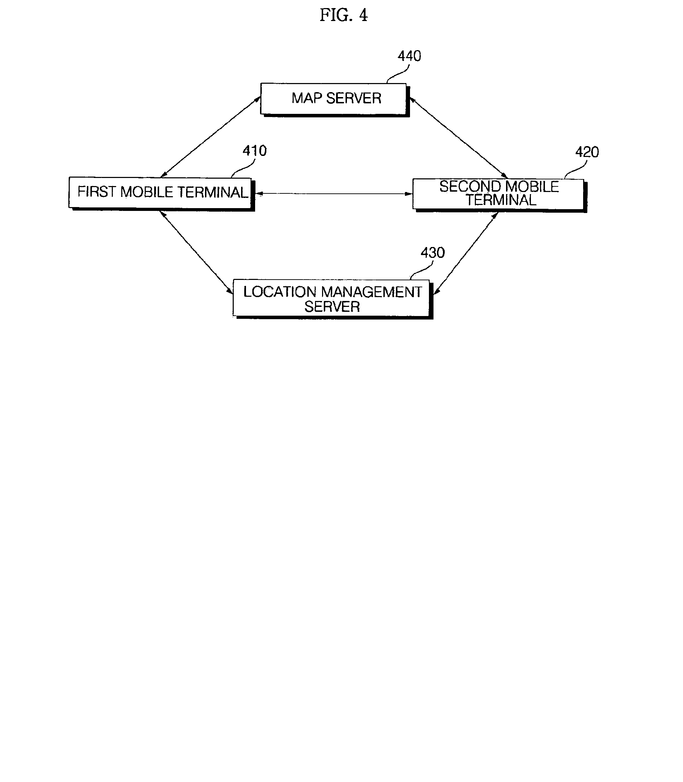

Various exemplary embodiments of how to realize augmented reality (AR) using the mobile terminal 100 will hereinafter be described in detail with reference to FIGS. 4 through 14C. In the following exemplary embodiments, it is assumed, for convenience, that the display module 151 is a touch screen.

FIG. 4 illustrates a schematic diagram of a communication system capable of providing location information of each mobile terminal and a map showing the location of each mobile terminal. Referring to FIG. 4, the communication system may include a first mobile terminal 410, a second mobile terminal 420, a location management server 430 and a map server 440. The first mobile terminal 410 may transmit data to or receive data from the second mobile terminal 420 via its wireless communication unit. The second mobile terminal 420 may be the receiver of a communication event initiated by the first mobile terminal 410 or the sender of a communication event received by the first mobile terminal 410. The counterpart second mobile terminal 420 may be any type of electronic device that can be easily located and can communicate with the first mobile terminal 410. The term 'communication event,' as used herein, includes, but is not limited to, a call connection request signal, an instance message, a multimedia message and email.

The location management server 430 may either wiredly or wirelessly communicate with the first mobile terminal 410 and the second mobile terminal 420, and may include a location information database (DB) in which location information of the first mobile terminal 410 and the second mobile terminal 420 is stored. The location management server 430 may receive location information of each of the first mobile terminal 410 and the second mobile terminal 420 either at regular intervals of time or whenever the location of each of the first mobile terminal 410 and the second mobile terminal 420 changes, and may update the location information present in its location information DB. The location management server 430 may provide the location information present in its location information DB upon the request of each of the first mobile terminal 410 and the second mobile terminal 420.

The map server 440 may either wiredly or wirelessly communicate with each of the first mobile terminal 410 and the second mobile terminal 420, and may include a map DB in which various maps and their respective location information are stored. The map server 440 may download the map DB in each of the first mobile terminal 410 and the second mobile terminal 420 or provide any one of the maps present in the map DB to each of the first mobile terminal 410 and the second mobile terminal 420 upon request. The term 'map,' as used herein, includes, but is not limited to, a typical map consisting of text and symbols and an image map consisting of a captured image of a region. The first mobile terminal 410 and the second mobile terminal 420 can obtain each other's location information and a map showing each other's location from the communication system. The first mobile terminal 410 can obtain location information of the second mobile terminal 420 using various methods not involving the use of the location management server 430, and vice versa. In this case, the location management server 430 may be optional.

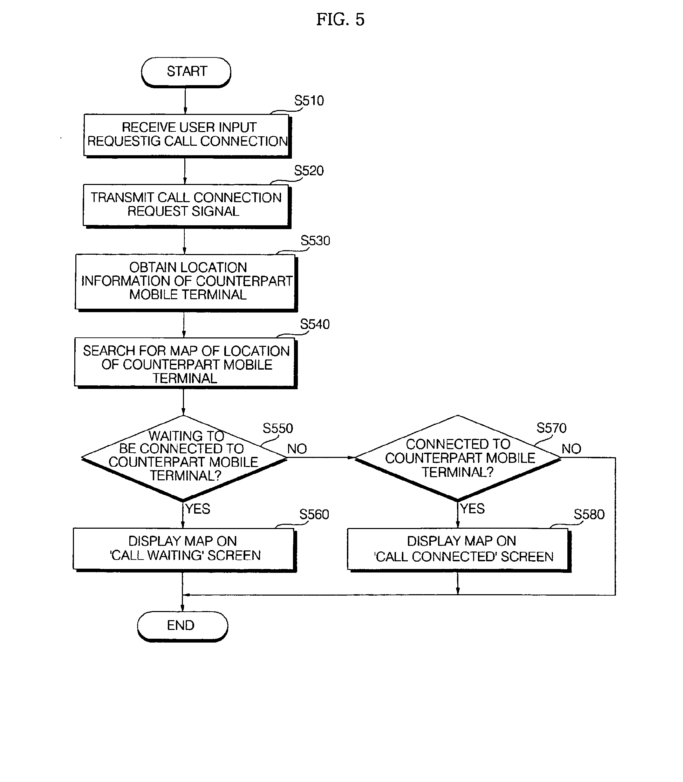

FIG. 5 illustrates a flowchart of an operating method of a mobile terminal, according to a first exemplary embodiment of the present invention. Referring to FIG. 5, the controller 180 may receive a user input requesting a call connection (S510). More specifically, if a 'dial' menu for connecting a call is selected in response to another user input, the controller 180 may display a phone number input window for entering a phone number on the display module 151. Then, if a user enters a phone number of a mobile terminal that he or she wishes to be connected to, i.e., a counterpart mobile terminal, into the phone number input window, the controller 180 may display the entered phone number in one area on the display module 151. Thereafter, if a command for selecting a 'SEND' key is received, the controller 180 may determine that a user input for making a call to the counterpart mobile terminal has been received.

Thereafter, the controller 180 may generate a call connection request signal and control the wireless communication unit 110 to transmit the generated call connection request signal to the counterpart mobile terminal (S520).

The controller 180 may obtain location information of the counterpart mobile terminal (S530). The controller 180 may issue a request for the location information of the counterpart mobile terminal to the location management server 430, independently of sending a call connection request to the counterpart mobile terminal, and may thus be provided with the location information of the counterpart mobile terminal by the location management server 430. Alternatively, the mobile terminal 100 may issue a request for the location information of the counterpart mobile terminal to the counterpart mobile terminal. Then, the counterpart mobile terminal may obtain its location information with the use of its GPS module, and may transmit the obtained location information to the mobile terminal 100. Still alternatively, the controller 180 may obtain the location information of the counterpart mobile terminal from the same base station that it has sent a call connection request to. Still alternatively, the controller 180 may determine the location of the counterpart mobile terminal based on the phone number of the counterpart mobile terminal.

Thereafter, the controller 180 may drive a map application and search a map DB for a map of the location of the counterpart mobile terminal based on the location information of the counterpart mobile terminal (S540). The map DB may be provided in the memory 160. If the map DB is provided in the map server 440, not in the memory 160, the controller 180 may communicate with the map server 440 via the wireless communication unit 110. The controller 180 may search the map DB for more than one map of the location of the counterpart mobile terminal. More specifically, the controller 180 may search the map DB for a plurality of maps with different scales for the location of the counterpart mobile terminal. The controller 180 may also search the map DB for a map of both the locations of the mobile terminal 100 and the counterpart mobile terminal.

Thereafter, the controller 180 may determine whether a current outgoing call made by the mobile terminal 100 in connection with the call connection request signal transmitted in operation S520 is still waiting to be connected to the counterpart mobile terminal (S550). More specifically, when a response signal for the call connection request signal transmitted in operation S520 is received from the counterpart mobile terminal, the controller 180 may determine that the current outgoing call has been connected to the counterpart mobile terminal 100. On the other hand, if no response signal for the request signal transmitted to the counterpart mobile terminal has yet been received from the counterpart mobile terminal, the controller 180 may determine that the current outgoing call is still waiting to be connected to the counterpart mobile terminal.

Thereafter, if it is determined in operation S550 that the current outgoing call is still waiting to be connected to the counterpart mobile terminal (S550-Y), the controller 180 may display at least part of the map returned from the map DB as the result of the searching performed in operation S540 on an 'outgoing call waiting' screen, which is a display screen that can be displayed when an outgoing call made by the mobile terminal 100 is waiting to be connected to the counterpart mobile terminal (S560). If only one map in a reference scale is returned from the map DB as the result of the searching performed in operation S540, the controller 180 may display the returned map on the 'outgoing call waiting' screen, and may gradually zoom in or out the corresponding map. For example, the controller 180 may gradually zoom in the returned map so that the area covered by the returned map can become smaller and smaller. Alternatively, the controller 180 may display a map of the location of the mobile terminal 100 on the 'outgoing call waiting' screen, and may then gradually zoom out the map to the extent that the location of the counterpart mobile terminal can also appear on the map. In this exemplary embodiment, the controller 180 may gradually zoom in or out a map in the reference scale, but the present invention is not restricted to this. That is, the controller 180 may sequentially display a plurality of maps in different scales, and may selectively zoom in or out parts of the maps showing the location of the counterpart mobile terminal.

On the other hand, if it is determined in operation S550 that the current outgoing call has been connected to the counterpart mobile terminal (S570), the controller 180 may display at least part of the map returned from the map DB as the result of the searching performed in operation S540 on an 'outgoing call connected' screen, which is a display screen that can be displayed when an outgoing call made by the mobile terminal 100 is connected (S580). The controller 180 may not zoom in or out the map displayed on the 'outgoing call connected' screen regardless of the lapse of time.

In this exemplary embodiment, the mobile terminal 100 may send a call connection request to the counterpart mobile terminal, and may then obtain the location information of the counterpart mobile terminal but the present invention is not restricted to this. That is, if a user input for making a call to the counterpart mobile terminal is received, the controller 180 may obtain the location of the counterpart mobile terminal and a map showing the location of the counterpart mobile terminal first. Then, the controller 180 may send a call connection request signal to the counterpart mobile terminal 100, and may display the obtained map on an 'outgoing call waiting' screen.

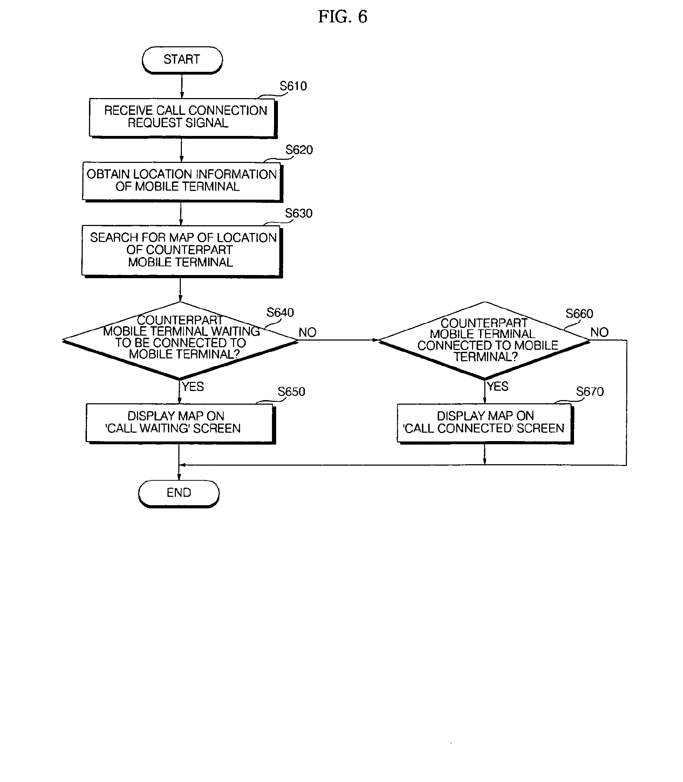

FIG. 6 illustrates a flowchart of an operating method of a mobile terminal, according to a second exemplary embodiment of the present invention. Referring to FIG. 6, the controller 180 may receive a call connection request signal from a counterpart mobile terminal (S610), and may obtain location information of the counterpart mobile terminal (S620). The counterpart mobile terminal may send its location information to the mobile terminal 100 while sending the call connection request signal. If no location information of the counterpart mobile terminal is received, the controller 180 may issue a request for the location information of the counterpart mobile terminal to the location management server 430 and may thus be provided with the location information of the counterpart mobile terminal. Alternatively, if the counterpart mobile terminal is a telephone or a personal computer (PC), the mobile terminal 100 may determine the location of the counterpart mobile terminal based on the phone number or serial number of the counterpart mobile terminal.

Thereafter, the controller 180 may search a map DB for a map of the location of the counterpart mobile terminal based on the location information of the counterpart mobile terminal (S630). The map DB may be provided in the memory 160. If the map DB is provided in an external device, not in the memory 160, the controller 180 may communicate with the external device via the wireless communication unit 110. The controller 180 may search the map DB for more than one map of the location of the counterpart mobile terminal. More specifically, the controller 180 may search the map DB for a plurality of maps with different scales for the location of the counterpart mobile terminal. The controller 180 may also search the map DB for a map of both the locations of the mobile terminal 100 and the counterpart mobile terminal.

Thereafter, if a current incoming call made by the counterpart mobile terminal in connection with the call connection request signal received in operation S610 is still waiting to be connected to the mobile terminal 100 (S640-Y), the controller 180 may display at least part of the map returned from the map DB as the result of the searching performed in operation S630 on an 'incoming call waiting' screen, which is a display screen that can be displayed when there is an incoming call waiting to be connected (S650). If only one map in a reference scale is returned from the map DB as the result of the searching performed in operation S630, the controller 180 may display the returned map on the 'incoming call waiting' screen, and may gradually zoom in or out the corresponding map. For example, the controller 180 may gradually zoom in the returned map so that the area covered by the returned map can become smaller and smaller. Alternatively, the controller 180 may display a map of the location of the counterpart mobile terminal on the 'incoming call waiting' screen, and may then gradually zoom out the map to the extent that the location of the mobile terminal 100 can also appear on the map. In this exemplary embodiment, the controller 180 may gradually zoom in or out a map with the reference scale, but the present invention is not restricted to this. That is, the controller 180 may sequentially display a plurality of maps with different scales, and may selectively zoom in or out parts of the maps showing the location of the counterpart mobile terminal.

On the other hand, if the current incoming call has already been connected to the mobile terminal 100 (S660), the controller 180 may display at least part of the map returned from the map DB as the result of the searching performed in operation S630 on an 'incoming call connected' screen, which is a display screen that can be displayed when an incoming call is connected to the mobile terminal 100 (S670). The controller 180 may not zoom in or out the map displayed on the 'outgoing call connected' screen regardless of the lapse of time.

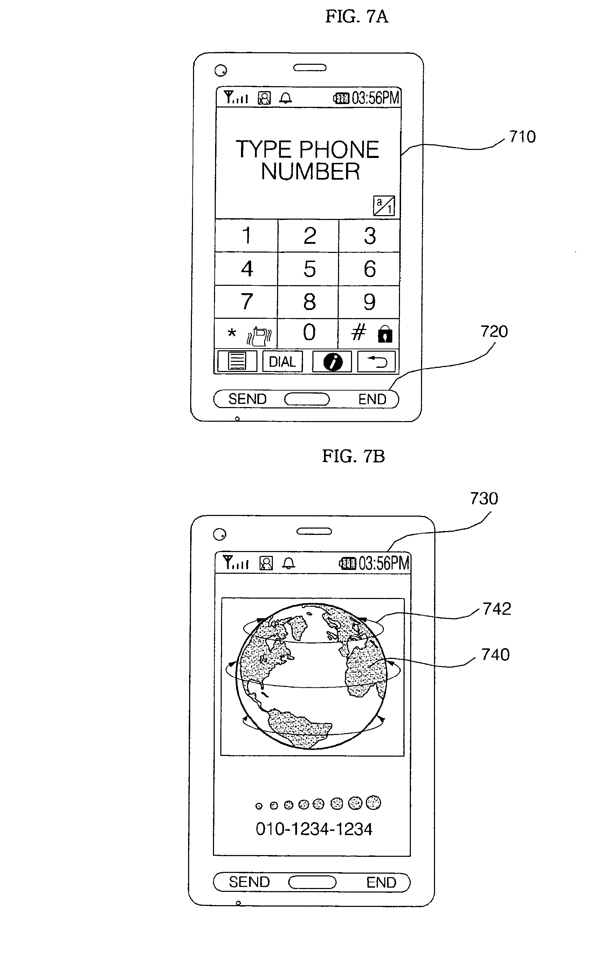

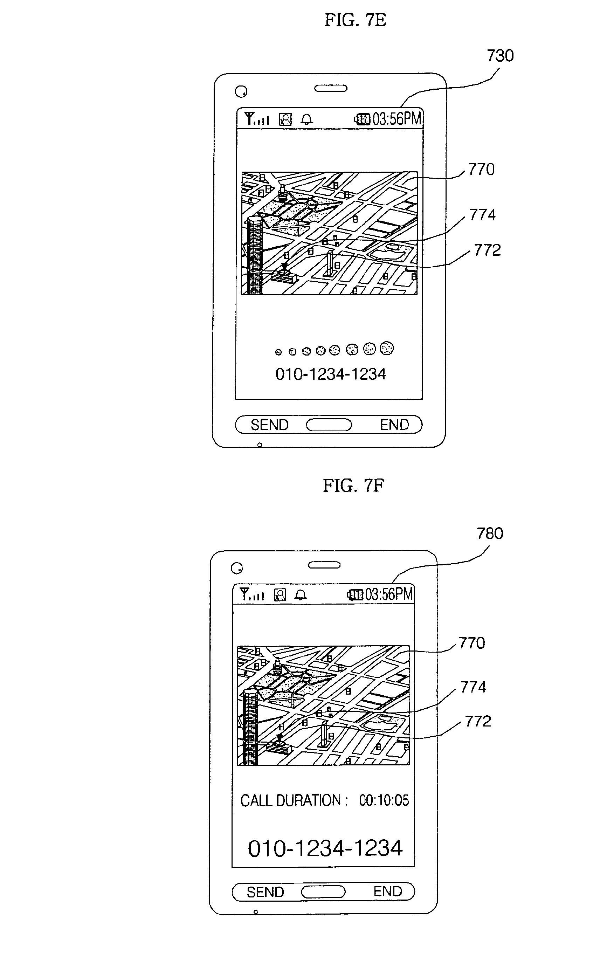

FIGS. 7A through 7F illustrate diagrams for explaining an example of how to display a map on a 'call waiting' or 'call connected' screen. Referring to FIG. 7A, if a user enters a phone number of a counterpart mobile terminal to a phone number input window 710 and then selects a 'SEND' key 720, the controller 180 may transmit the entered phone number to the location management server 430, may issue a request for location information of the counterpart mobile terminal and may thus be provided with the location information of the counterpart mobile terminal. Thereafter, the controller 180 may search for one or more maps of the location of the counterpart mobile terminal based on the location information of the counterpart mobile terminal.

Since it generally takes time to obtain a location information of a mobile terminal and a map showing the location of the mobile terminal, the controller 180 may drive a map application and may thus read out a map 740 of the globe in a reference scale. Thereafter, referring to FIG. 7B, the controller 180 may display the globe map 740 on a 'call waiting' screen 730. More specifically, the controller 180 may spin the globe in the globe map 740 as an indicator that the search for the location information of the counterpart mobile terminal and a map of the location of the counterpart mobile terminal is in progress.

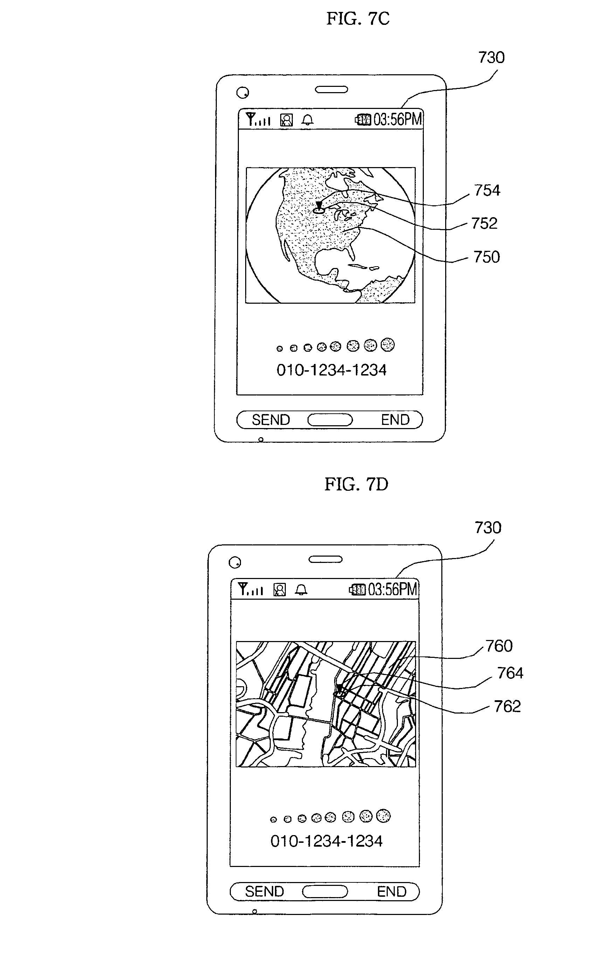

Referring to FIG. 7C, once the location information of the counterpart mobile terminal and a map of the location of the counterpart mobile terminal are obtained, the controller 180 may stop the spinning globe in the globe map 740, and may mark a location 752 of the counterpart mobile terminal on the globe map 740 with a first indicator 754. Thereafter, the controller 180 may gradually zoom in the globe map 740 so that a closer, more detailed view of the location 752 can be provided. FIG. 7C illustrates a globe map 750 obtained by zooming in the globe map 740.

Referring to FIG. 7D, when the globe map 740 is zoomed in to some extent, it may be replaced with a map 760 of the location of the counterpart mobile terminal. A location 762 of the counterpart mobile terminal 762 may be displayed in the middle of the map 760, and may be marked with a first indicator 764. FIG. 7E illustrates an example of the'call waiting' screen 730 showing a map 770 obtained by zooming in the map 760 to a default scale. Referring to FIG. 7E, a location 772 of the counterpart mobile terminal may be marked with a first indicator 774. In short, as a map of the location of the counterpart mobile terminal zooms in, a closer, more detailed view of the location of the counterpart mobile terminal can be provided.

Thereafter, when a call is connected between the mobile terminal 100 and the counterpart mobile terminal, the controller 180 may display the map 770 on a 'call connected' screen 780 in a default scale. More specifically, if the call is connected when the zoom-in of the map 770 on the 'call waiting' screen 730 to the default scale is yet to be complete, the controller 180 may stop zooming in the map 770 on the 'call waiting' screen 730, may display the 'call connected' screen 780, instead of the 'call waiting' screen 730, and may resume the zoom-in of the map 770 on the 'call connected' screen 780. Alternatively, the controller 180 may simply display a map obtained by zooming in the map 770 to the default scale on the 'call connected' screen 780 without zooming in the map 770.

In the example of FIGS. 7A through 7F, a map of the location of the counterpart mobile terminal may be displayed on a 'call waiting' screen while sending a call connection request signal to the counterpart mobile terminal. Thus, the user can readily locate the counterpart mobile terminal from the'call waiting' screen and may feel less bored while waiting to be connected to the counterpart mobile terminal.

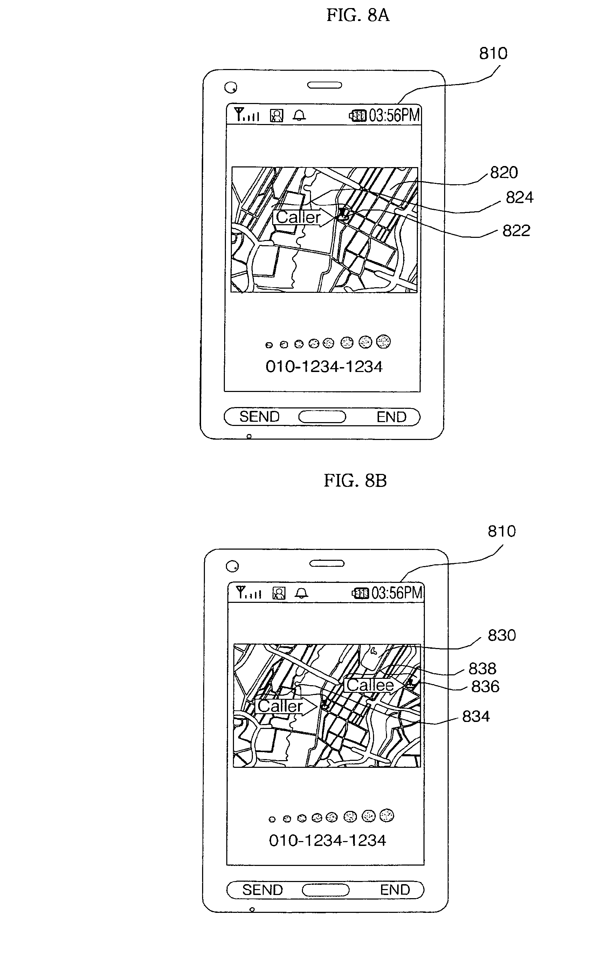

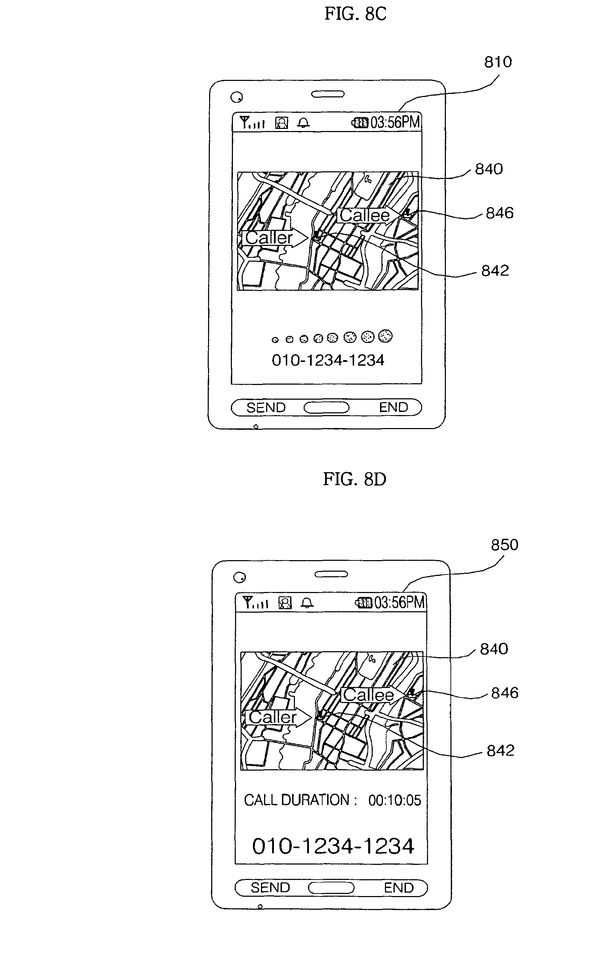

FIGS. 8A through 8D illustrate diagrams for explaining another example of how to display a map on a 'call waiting' or 'call connected' screen. Referring to FIG. 8A, the controller 180 may drive a map application and may thus search for a map of both the locations of the mobile terminal 100 and a counterpart mobile terminal. Then, the controller 180 may display a portion of the returned map, i.e., a first map 820 showing a location 862 of the mobile terminal 100, on a 'call waiting' screen 810. Thereafter, the controller 180 may gradually zoom out the first map 820 to the extent that the location of the counterpart mobile terminal can also be displayed on the first map 820. FIG. 8B illustrates an example of the'call waiting' screen 810 that can be displayed during the zoom-out of the first map 820, and FIG. 8C illustrates an example of the'call waiting' screen 810 showing a map 840 obtained by zooming out the first map 820 to the extent that the location of the mobile terminal 100 and the location of the counterpart mobile terminal can both appear on the first map 820. Referring to FIG. 8D, a first indicator representing a location 842 of the mobile terminal 100 and a second indicator representing a location 846 of the counterpart mobile terminal may be displayed on the map 840.

Thereafter, referring to FIG. 8D, when a call is connected between the mobile terminal 100 and the counterpart mobile terminal, the controller 180 may display the map 840, which shows both the location 842 and the location 846, on a 'call connected' screen 850. More specifically, if the call is connected when the zoom-out of the map 840 on the 'call waiting' screen 810 to the default scale is yet to be complete, the controller 180 may stop zooming out the map 840 on the `call waiting' screen 810, may display the `call connected' screen 850, instead of the `call waiting' screen 810, and may resume the zoom-out of the map 840 on the 'call connected' screen 850. Alternatively, the controller 180 may simply display a map obtained by zooming out the map 840 to the default scale on the 'call connected' screen 850 without zooming out the map 840.

In the example of FIGS. 8A through 8D, the location of the counterpart mobile terminal may be displayed at the center of a map. Alternatively, the midpoint between the location of the mobile terminal 100 and the location of the counterpart mobile terminal may be displayed at the center of a map.

In the example of FIGS. 8A through 8D, a map of the location of the mobile terminal 100 may be gradually zoomed out to the extent that the location of the counterpart mobile terminal can also be displayed on the map. However, the present invention is not restricted to this. That is, a map of the location of the counterpart mobile terminal may be gradually zoomed out to the extent that the location of the mobile terminal 100 can also be displayed on the map.

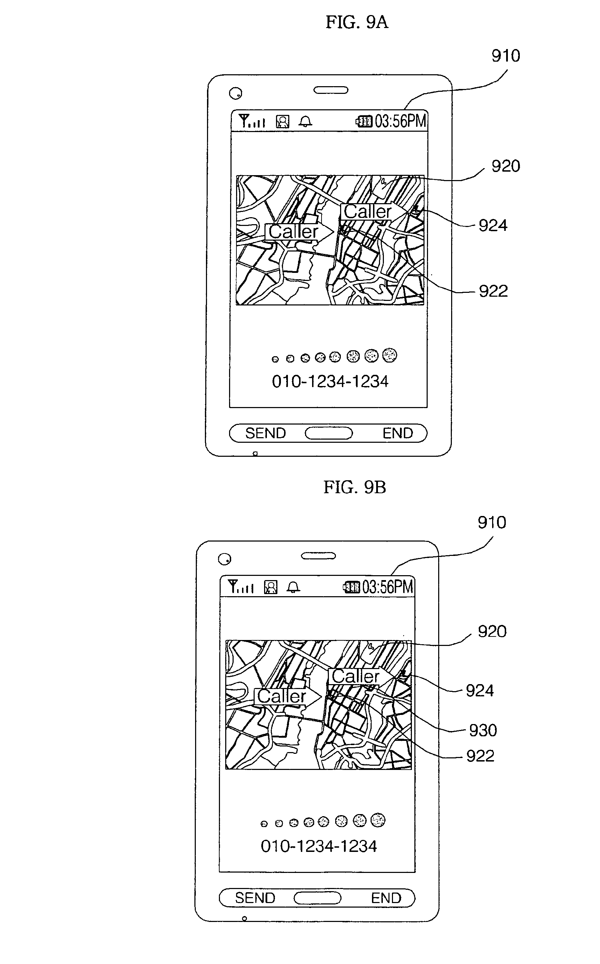

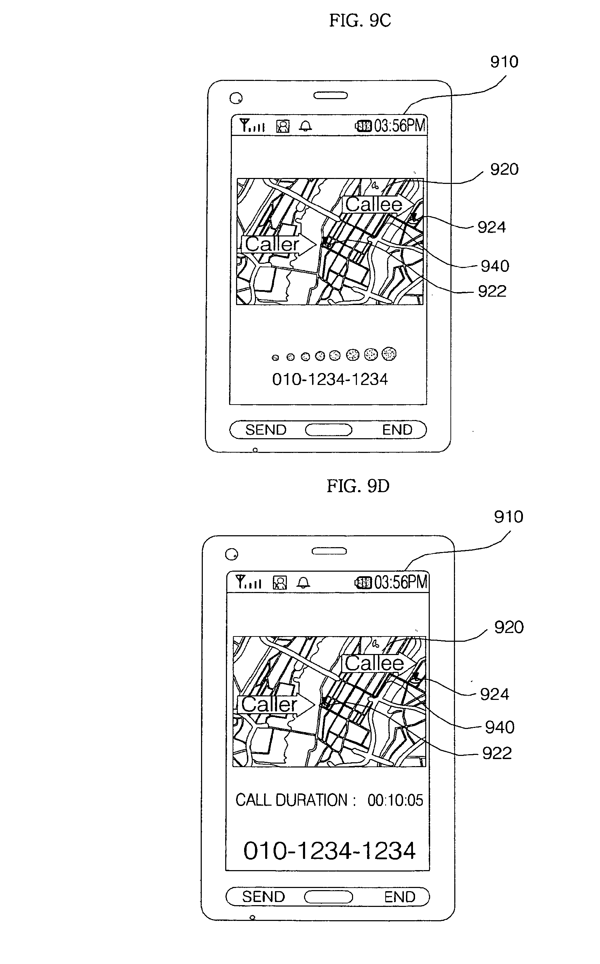

FIGS. 9A through 9D illustrate diagrams for explaining another example of how to display a map on a 'call waiting' or 'call connected' screen. Referring to FIG. 9A, the controller 180 may drive a map application and may thus search for a map of both the locations of the mobile terminal 100 and a counterpart mobile terminal. Then, the controller 180 may display the returned map, i.e., a map 920 showing both a location 922 of the mobile terminal 100 and a location 924 of the counterpart mobile terminal, on a 'call waiting' screen 910. Then, referring to FIG. 9B, the controller 180 may display the process of tracking a route between the locations 922 and 924 on the map 920. FIG. 9C illustrates an example of the'call waiting' screen 910 that can be displayed during the route tracking process.

Thereafter, referring to FIG. 9D, if a call is connected between the mobile terminal 100 and the counterpart mobile terminal, the controller 180 may display the map 920, which shows a route found between the locations 922 and 924, on a 'call connected' screen 950. If the call is connected when the route tracking process is yet to be complete, the controller 180 may stop the route tracking process, may display the 'call connected' screen 950, instead of the `call waiting' screen 910, may resume the route tracking process, and may display the progress in the resumed route tracking process on the `call connected' screen 950. Alternatively, the controller 180 may simply display a map showing a route between the locations 922 and 924 that can be found by the route tracking process on the 'call connected' screen 950 without displaying the whole route tracking process on the 'call connected' screen 950.

The route between the locations 922 and 924 that can be found by the route tracking process may be a shortest route between the locations 922 and 924, but the present invention is not restricted to this. That is, various routes, for example, a route by public transportation, a route by car, and a route with a high comfort index, may be set between the locations 922 and 924 in response to a user input.

In the example of FIGS. 9A through 9D, the process of tracking a route from the location of the mobile terminal 100 to the location of the counterpart mobile terminal may be displayed on the display module 151. However, the present invention is not restricted to this. That is, the process of tracking a route from the location of the counterpart mobile terminal to the location of the mobile terminal 100, instead of from the location of the mobile terminal 100 to the location of the counterpart mobile terminal, may be displayed on the display module 151.

The controller 180 may display a map on an incoming call screen upon the receipt of a call connection request signal from the counterpart mobile terminal in the same manner as that used to display a map on an outgoing call screen upon the transmission of a call connection request signal to the counterpart mobile terminal. Thus, a detailed description of how to display a map on an incoming call screen upon the receipt of a call connection request signal from the counterpart mobile terminal will be omitted.

In the example of FIGS. 9A through 9D, a map of the location of the counterpart mobile terminal may be displayed on a 'call waiting' or 'call connected' screen on the display module 151 of the mobile terminal 100. However, the present invention is not restricted to this. That is, the map of the location of the counterpart mobile terminal may also be displayed on a display screen (such as an idle screen or an operation screen) relevant to the transmission or reception of a communication event, other than a call, such as an instant message, multimedia message or email.

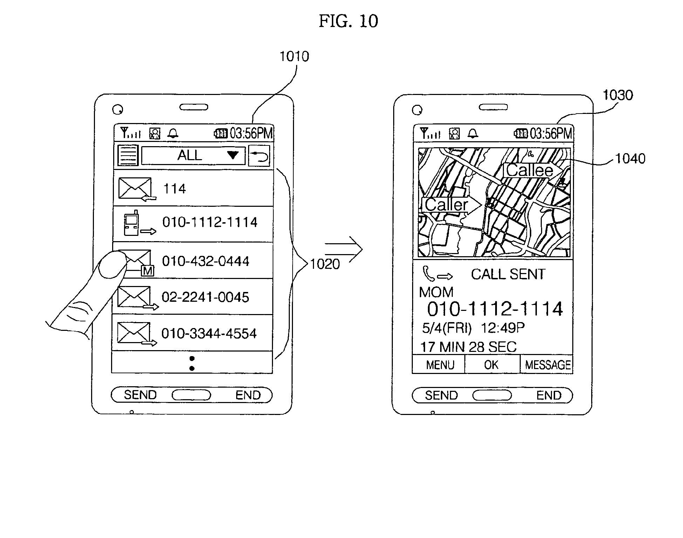

The display of a map of the location of the counterpart mobile terminal during the transmission or reception of a communication event to or from the counterpart mobile terminal can be applied to various services performed by the mobile terminal 100, and this will hereinafter be described in detail with reference to FIG. 10.

FIG. 10 illustrates diagrams for explaining an example of how to display call record information using a map. Referring to FIG. 10, a list 1020 of incoming, outgoing and missed calls may be displayed on a call history screen 1010. If a user enters a command to display detailed information on a predetermined callee by selecting one of the entries in the list 1020, a detailed caller/callee information screen 1040 showing detailed information on an outgoing call to the predetermined callee and a map of the location of the predetermined callee at the time of the call to the predetermined callee may be displayed on the display module 151. The map may be selectively displayed on the detailed caller/callee information screen 1040 according to a user setting in the mobile terminal 100. More specifically, the user may set the mobile terminal 100 in advance to display detailed information on each call on the detailed caller/callee information screen 1040 along with a map of the location of each caller or callee. Otherwise, the map of the location of each caller or callee may be provided only on a'call waiting' or 'call connected' screen.

In the example of FIG. 10, during the transmission or reception of a communication event to or from a counterpart mobile terminal, the controller 180 may display the location of the counterpart mobile terminal on the display module 151 using a map. However, the present invention is not restricted to this. That is, the controller 180 may display the location of the counterpart mobile terminal on the display module 151 as text. During the transmission or reception of a communication event to or from the counterpart mobile terminal, the controller 180 may obtain location information of the counterpart mobile terminal, and may determine whether the communication event is a type of communication event set to be rejected based on the obtained location information.

As described above, according to the present invention, during the transmission of a communication event between a mobile terminal and a counterpart mobile terminal, a map of the location of the counterpart mobile terminal may be displayed on a 'call waiting' or 'call connected' screen on the display module of the mobile terminal. Thus, a user of the mobile terminal can easily identify the location of a counterpart mobile terminal from the'call waiting' or 'call connected' screen.

In addition, it is possible to provide a dynamic map showing routes to the location of the counterpart mobile terminal and thus to improve user satisfaction.

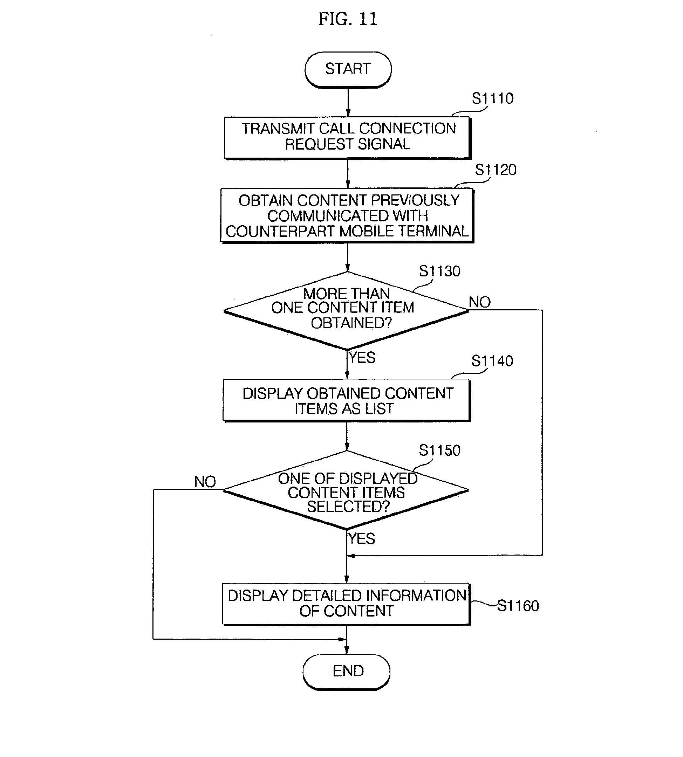

FIG. 11 illustrates a flowchart of an operating method of a mobile terminal, according to another exemplary embodiment of the present invention, and particularly, how to provide content previously communicated between the mobile terminal 100 and another mobile terminal. Referring to FIG. 11, the controller 180 may transmit a call connection request signal to a mobile terminal that a user wishes to be connected to, i.e., a counterpart mobile terminal, via the wireless communication unit 110 (S1110). More specifically, if the user enters a phone number of the counterpart mobile terminal via the user input unit 130 and selects a 'SEND' key, the controller 180 may generate a call connection request signal and may transmit the generated call connection request signal to the counterpart mobile terminal. Then, a 'call waiting' screen may be displayed on the display module 151.

Thereafter, the controller 180 may obtain one or more content items previously communicated between the mobile terminal 100 and the counterpart mobile terminal from a content DB (S1120). The content DB may store a plurality of content items received from or transmitted to various external devices in association with information (e.g., phone numbers) on the various external devices. The content DB may be provided in the memory 160 or in an external server. If the content DB is provided in an external server, the controller 180 may obtain the content items previously communicated between the mobile terminal 100 and the counterpart mobile terminal from the content DB by communicating with the external server via the wireless communication unit 110.

In the content DB, various content items may be stored in association with information on their respective source external devices. If the content DB stores more than one content item for each external device, the content items may be classified into one or more groups according to their types, such as text messages, multimedia messages, still images, moving images, audio data, call records, and call contents.

The controller 180 may read out content items communicated between the mobile terminal 100 and the counterpart mobile terminal in a certain period of time from the content DB. For example, the controller 180 may read out content items communicated between the mobile terminal 100 and the counterpart mobile terminal during the last week from the content DB. The term 'content items previously communicated between the mobile terminal 100 and the counterpart mobile terminal,' as used herein, includes content items previously transmitted from the mobile terminal 100 to the counterpart mobile terminal and content items previously received from the counterpart mobile terminal to the mobile terminal 100.

Thereafter, if more than one content item is read out from the content DB in operation S1120 (S1130-Y), the controller 180 may display the read-out content items on the display module 151 as a list (S1140). More specifically, the controller 180 may classify the read-out content items into one or more categories, and may create a content list in which the read-out content items are arranged in units of the categories. Alternatively, the controller 180 may arrange the read-out content items in order of the time when they were received from or transmitted to the counterpart mobile terminal, and may display the arranged content items as a list.

Thereafter, if a user command for selecting one of the content items displayed in operation S1140 is received (S1150-Y), the controller 180 may read out detailed information on the selected content item from the content DB and may display at least some of the read-out information on the display module 151 (S1160). For example, if the selected content item is a text message, the controller 180 may display the title, the whole content and the time of transmission or reception of the text message, or may display the time of transmission or reception of the text message, part of the content of the text message, and or the title of the text message in consideration of a limited display size of the display module 151.

If only one content item is read out from the content DB in operation S1120 (S1130-N), the controller 180 may read out detailed information on the content item from the content DB and may display at least some of the read-out information on the display module 151 (S1160). If no content item is read out from the content DB in operation S1120, the controller 180 may display a 'No Content' notification on the display module 151.

In operation S1140 or S1160, a list of content items read out from the content DB or at least part of the content of a content item selected from the list may be displayed on a 'call waiting' screen or a 'call connected' screen.

The content item(s) previously communicated between the mobile terminal 100 and the counterpart mobile terminal may also be displayed upon the receipt of a call connection request signal from the counterpart mobile terminal 100. Since information on the counterpart mobile terminal is received along with the call connection request signal transmitted by the counterpart mobile terminal 100, the controller 180 may easily search the content DB for the content items previously communicated between the mobile terminal 100 and the counterpart mobile terminal based on the received information, and may display at least part of each of the content items returned from the content DB on the display module 151.

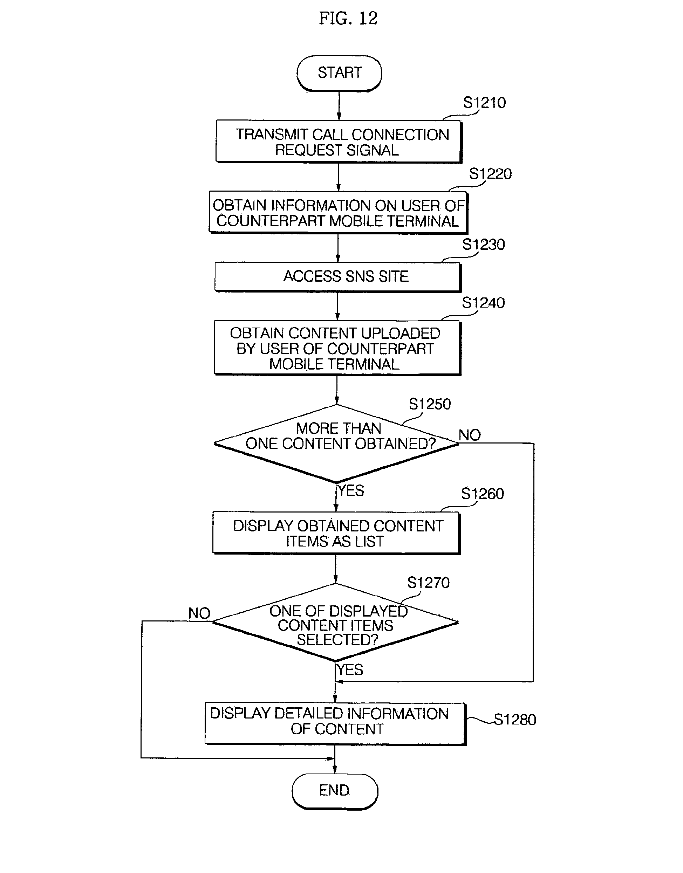

The controller 180 may also display a list of content items uploaded to a predetermined website by the counterpart mobile terminal upon the receipt of a call connection request signal from the counterpart mobile terminal 100 or the transmission of a call connection request signal to the counterpart mobile terminal 100, and this will hereinafter be described in further detail with reference to FIG. 12.

FIG. 12 illustrates a flowchart of an operating method of a mobile terminal, according to another exemplary embodiment of the present invention, and particularly, how to provide content previously uploaded by a counterpart mobile terminal. Referring to FIG. 12, the controller 180 may transmit a call connection request signal to the counterpart mobile terminal via the wireless communication unit 110, and may display a 'call waiting' screen on the display module 151 (S1210).

Thereafter, the controller 180 may obtain information on the user of the counterpart mobile terminal based on information on the counterpart mobile terminal (S1220). For example, the controller 180 may obtain various information on the user of the counterpart mobile terminal such as a real name that is stored in a phone number DB or a screen name or nickname that is used in, for example, a social networking service (SNS) site.

Thereafter, the controller 180 may activate web browsing and may thus access a predetermined SNS site (S1230). Thereafter, the controller 180 may search for one or more content items uploaded to the predetermined SNS site by the user of the counterpart mobile terminal (S1240). The controller 180 may also search for one or more content items uploaded to the predetermined SNS site by the user of the mobile terminal 100 in connection with each content item uploaded by the user of the counterpart mobile terminal. More specifically, the controller 180 may search for content items uploaded by the user of the counterpart mobile terminal during a predetermined period of time.

If more than one content item is obtained in operation S1240 (S1250-Y), the controller 180 may display the obtained content items on the display module 151 as a list (S1260). More specifically, the controller 180 may classify the obtained content items into one or more categories, and may create a content list in which the obtained content items are arranged in units of the categories. Alternatively, the controller 180 may create a content list in which the obtained content items are arranged in order of the time when they were uploaded the predetermined SNS site, and may display the created content list on the display module 151.

Thereafter, if a user command for selecting one of the content items displayed in operation S1260 is received (S1270-Y), the controller 180 may read out detailed information on the selected content item from a content DB and may display at least some of the read-out information on the display module 151 (S1160). For example, if the selected content item is a text message, the controller 180 may display the whole content of the text message and the time when the text message was uploaded, or may display the time when the text message was uploaded and only part of the content of the text message in consideration of a limited display size of the display module 151.

If only one content item is obtained in operation S1240 (S1250-N), the controller 180 may read out detailed information on the content item from the content DB and may display at least some of the read-out information on the display module 151 (S1160). If no content item is obtained in operation S1240, the controller 180 may display a 'No Content' notification on the display module 151.

In operation S1260 or S1280, a list of content items uploaded by the user of the counterpart mobile terminal or at least part of the content of a content item selected from the list may be displayed on a 'call waiting' screen or a 'call connected' screen.

In the exemplary embodiments of FIGS. 11 and 12, the content item(s) previously communicated between the mobile terminal 100 and the counterpart mobile terminal or the content item(s) uploaded to an SNS site by the counterpart mobile terminal may be displayed upon the receipt of a call connection request signal from the counterpart mobile terminal or the transmission of a call connection request signal to the counterpart mobile terminal. However, the present invention is not restricted to this. That is, both the content item(s) previously communicated between the mobile terminal 100 and the counterpart mobile terminal and the content item(s) uploaded to an SNS site by the counterpart mobile terminal may be displayed upon the receipt of a call connection request signal from the counterpart mobile terminal or the transmission of a call connection request signal to the counterpart mobile terminal.

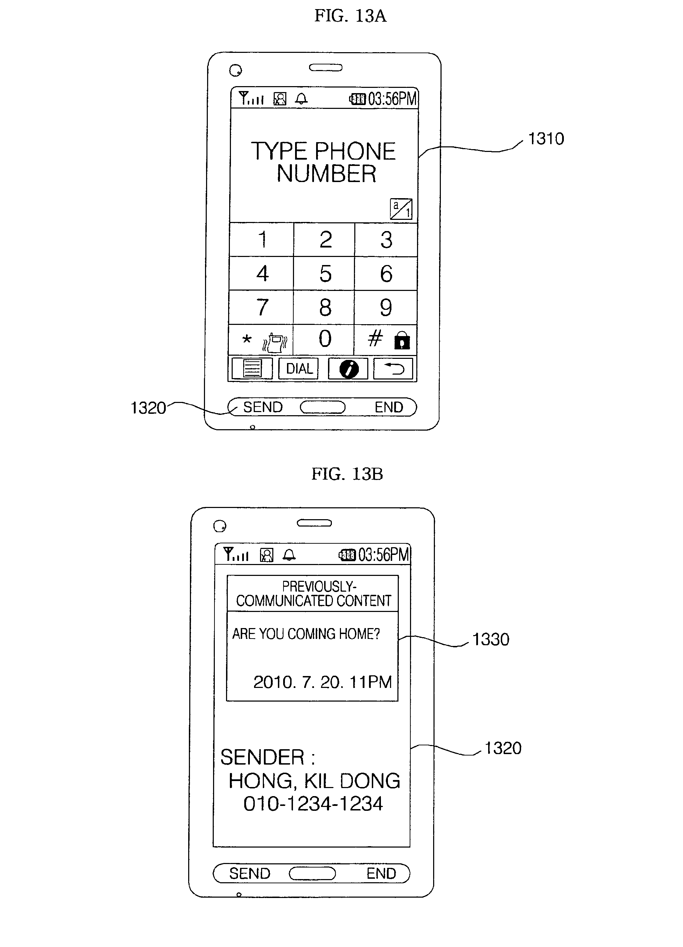

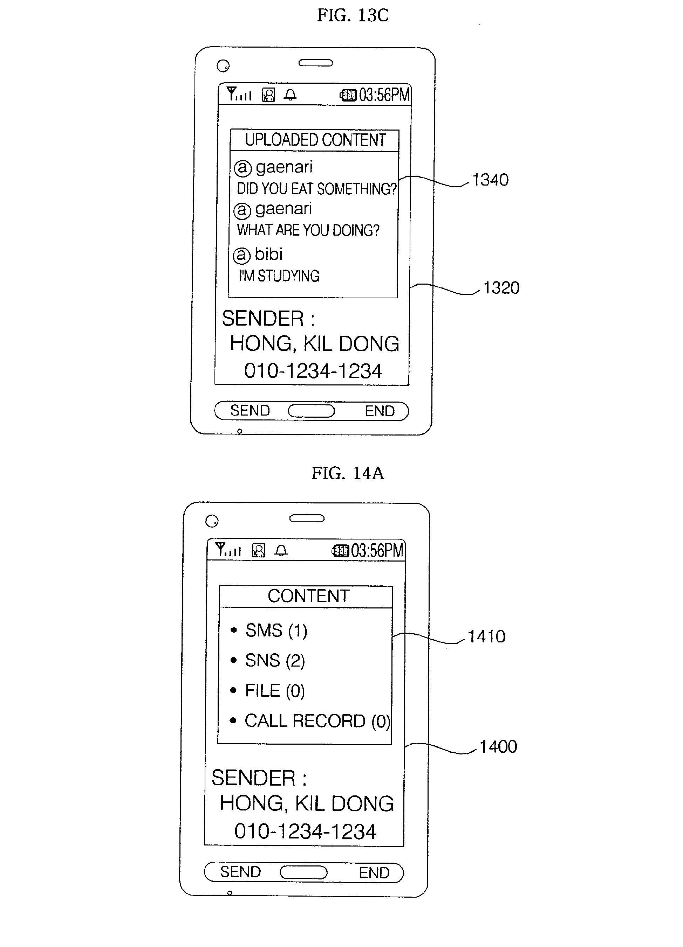

FIGS. 13 through 13C illustrate diagrams for explaining an example of how to display content during call waiting. Referring to FIG. 13A, if a user enters a phone number of a mobile terminal that he or she wishes to be connected to via the user input unit 130, i.e., a counterpart mobile terminal, and selects a 'SEND' key 1320, the controller 180 may generate a call connection request signal and may transmit the generated call connection request signal to the counterpart mobile terminal. Thereafter, the controller 180 may search a content DB for one or more content items previously communicated between the mobile terminal 100 and the counterpart mobile terminal based on the phone number of the counterpart mobile terminal.

If only one content item is returned from the content DB as the result of the searching, the controller 180 may display at least part of the returned content item. More specifically, referring to FIG. 13B, if the returned content item is a text message, the controller 180 may display at least a portion 1330 of the text message on a 'call waiting' screen 1320. Since it is obvious that the text message is a content item previously received from or transmitted to the counterpart mobile terminal, any information on the counterpart mobile terminal may be excluded from the text message, and the resulting text message may be displayed on the'call waiting' screen 1320.

Referring to FIG. 13C, if there is a content item uploaded to an SNS site by the counterpart mobile terminal, the controller 180 may display at least a portion 1340 of the uploaded content item on the'call waiting' screen 1320. The controller 180 may also display one or more content items, if any, related to the uploaded content item on the 'call waiting' screen 1320. In this manner, it is possible to easily identify content uploaded by the counterpart mobile terminal.

FIGS. 14A through 14C illustrate diagrams for explaining an example of how to create a list of content items during call waiting. Referring to FIG. 14A, when there is more than one content item previously communicated between the mobile terminal 100 and a counterpart mobile terminal or previously uploaded by the counterpart mobile terminal, the controller 180 may display the content items as a list. More specifically, the controller 180 may classify the content items into one or more categories, may create a content list 1410 showing the categories, and may display the content list 1410 on a 'call waiting' screen 1400. Then, a user may select one of the categories from the content list 1410, and may thus view a list of content items included in the selected category.

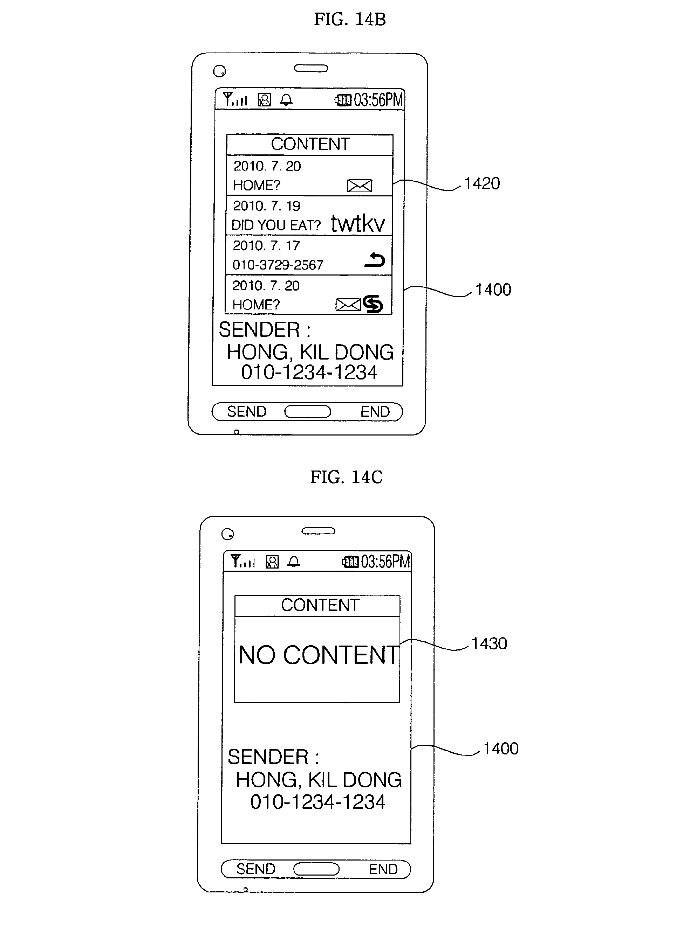

Alternatively, referring to FIG. 14B, the controller 180 may create a content list 1420 in which a plurality of content items are arranged in order of the time when they were communicated or uploaded, and may display the content list 1420 on the 'call waiting' screen 1400. Each entry in the content list 1420 may show the time when a corresponding content item was communicated or updated and at least part of the content of the corresponding content item, and may also show the title, if any, of the corresponding content item.

Referring to FIG. 14C, if there is no content item previously communicated between the mobile terminal 100 and the counterpart mobile terminal or previously uploaded by the counterpart mobile terminal, the controller 180 may display a 'No Content' notification 1430 on the 'call waiting' screen 1400.

The present invention can be realized as code that can be read by a processor (such as a mobile station modem (MSM)) included in a mobile terminal and that can be written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission through the internet). The computer-readable recording medium can be distributed over a plurality of computer systems connected to a network so that computer-readable code is written thereto and executed therefrom in a decentralized manner. Functional programs, code, and code segments needed for realizing the present invention can be easily construed by one of ordinary skill in the art.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An operating method of a mobile terminal, the operating method comprising:
during the transmission or reception of a communication event between the mobile terminal and a counterpart mobile terminal, obtaining location information of the counterpart mobile terminal;
obtaining a map of a first region corresponding to the location information of the counterpart mobile terminal; and
displaying at least part of the map of the first region on a display screen indicating that the transmission or reception of the communication event is in progress.

2. The operating method of claim 1, wherein the displaying of the at least part of the map of the first region comprises gradually zooming in or out.

3. The operating method of claim 1, further comprising zooming in the map of the first region so that a closer, more detailed view of the first region can be provided.

4. The operating method of claim 1, wherein the obtaining of the map of the first region comprises obtaining a plurality of maps of the first region in different scales.

5. The operating method of claim 4, wherein the displaying of the at least part of the map of the first region comprises sequentially displaying the plurality of maps in increasing order of scale.

6. The operating method of claim 1, wherein the obtaining of the map of the first region comprises obtaining a map of the first region and a second region corresponding to location information of the mobile terminal.

7. The operating method of claim 6, wherein the displaying of the at least part of the map of the first region comprises displaying a portion of the map of the first and second regions where only the second region is shown and zooming out the map portion so that the first region and the second region can both appear on the display screen.

8. The operating method of claim 6, wherein the displaying of the at least part of the map of the first region comprises displaying a portion of the map of the first and second regions where only the first region is shown and zooming out the map portion so that the first region and the second region can both appear on the display screen.

9. The operating method of claim 6, wherein the displaying of the at least part of the map of the first region further comprises displaying a portion of the map of the first and second regions where the first and second regions are both shown.

10. The operating method of claim 9, further comprising displaying a process of tracking a route between the first and second regions on the map of the first and second regions.

11. The operating method of claim 1, further comprising displaying an indicator that shows the correspondence between the first region and the location information of the mobile terminal.

12. The operating method of claim 1, wherein the communication event includes at least one of a call connection request signal, an instant message, a multimedia message and email.

13. A mobile terminal comprising:
a display module configured to, during the transmission or reception of a communication event between the mobile terminal and a counterpart mobile terminal, display thereon a display screen indicating that the transmission or reception of the communication event is in progress; and
a controller configured to obtain location information of the counterpart mobile terminal and a map of a first region corresponding to the location information of the counterpart mobile terminal and display at least part of the map of the first region on the display screen.

14. The mobile terminal of claim 13, wherein the controller is further configured to gradually zoom in or out the map of the first region.

15. The mobile terminal of claim 13, wherein the controller is further configured to zoom in the map of the first region so that a closer, more detailed view of the first region can be provided.
